# EUROPEAN PATENT SPECIFICATION

(11) **EP 2 216 643 B1**
(45) Date of publication and mention of the grant of the patent: **17.02.2021**
(21) Application number: 08853339.3
(22) Date of filing: 01.10.2008
(51) Int. Cl.: G01N 21/956, G01N 21/88, G01N 21/84, B01D 46/24, B28B 17/00, F01N 3/02, F01N 3/28, B28B 11/00

(54) **METHOD FOR DETECTING MASK DEFECT OF END SURFACE OF HONEYCOMB STRUCTURE**
VERFAHREN ZUR ERKENNUNG EINES MASKENDEFEKTS AUF DER ENDOBERFLÄCHE EINER WABENSTRUKTUR
PROCÉDÉ DESTINÉ À DÉTECTER UN DÉFAUT DE MASQUE D'UNE SURFACE D'EXTRÉMITÉ D'UNE STRUCTURE EN NID D'ABEILLE

(30) Priority: 28.11.2007 JP 2007307269
(43) Date of publication of application: 11.08.2010
(73) Proprietor: NGK Insulators, Ltd., Nagoya-shi, Aichi 467-8530 (JP)
(72) Inventor: INOUE, Jun, Nagoya-shi Aichi 467-8530 (JP)
(74) Representative: Mewburn Ellis LLP
(86) International application number: PCT/JP2008/067838
(87) International publication number: WO 2009/069377

(56) References cited:
- EP-A1- 0 070 202
- WO-A1-2007/122707
- JP-A- 2004 154 768
- JP-A- 2005 270 967
- JP-A- 2006 337 237
- JP-A- 2007 313 741
- US-A1- 2002 135 107
- US-A1- 2004 149 026

## Description

### Technical Field

The present invention relates to a method for detecting a mask defect on an end surface of a honeycomb structure. More specifically, the present invention relates to a method for detecting a mask defect of an end surface of a honeycomb structure, the method being capable of effectively detecting a defect of sticking of a mask tape on an end surface of a honeycomb structure.

### Background Art

In various fields such as chemistry, electric power, and iron and steel, there is employed a ceramic plugged honeycomb structure excellent in thermal resistance and corrosion resistance as a carrier for a catalytic device used for environmental measures, collection of specific substances, or the like, or as a filter. In particular, recently, a plugged honeycomb structure has a strong demand as a diesel particulate filter (DPF) for trapping particulate matter (PM) discharged from a diesel engine. As a material for a honeycomb structure used at high temperature in a corrosive gas atmosphere, silicon carbide (SiC) excellent in thermal resistance and chemical stability is suitably used.

Regarding a plugged honeycomb structure formed with silicon carbide as the framework, in the case of manufacturing a structure having a predetermined size or larger, there is a method in which a plurality of segments for a plugged honeycomb structure are manufactured and bonded together to obtain a large plugged honeycomb structure. The plugged honeycomb structure segments (segments) are bonded by the use of a bonding material, which is applied on side faces of predetermined segments to bond a plurality of segments together (see Patent Document 1). When a bonding material is applied on side faces of segments, and when segments are bonded together, there arises a problem that an open portion of a cell open on one end surface of a segment is covered by a bonded material extended on the end surface side. Therefore, there is a method in which a mask tape is stuck on the end surface of the honeycomb structure segment to inhibit the cell open portion frombeing covered by the bonding material.

Patent Document 1: WO No. 2002/031371 pamphlet.

US 2002/135107 A1 describes a method of producing a ceramic body having a construction such that cells are plugged alternately at both end faces of a ceramic honeycomb structural body by filling a plugging slurry into predetermined cells at both end faces of a ceramic honeycomb formed body, having the steps of: filling a plugging material for mask into the cells to be opened at one end face of the ceramic honeycomb formed body; immersing the end face, to which the plugging material for mask is filled, into a plugging slurry; and drying and sintering the ceramic honeycomb formed body while the plugging material for mask is removed during a drying step or a sintering step.

EP 0 070 202 A1 describes a mask for charging flowable materials into selected cells of a honeycomb structure. The mask comprises a solid body with a number of openings extending through it, which are spaced to coincide with the open ends of the selected cells exposed at the structure's end face. After the mask is positioned across the end face, the flowable material is charged through the openings. A rigid plate having a number of bores through it may be provided for charging a plastically formable plugging material into a honeycomb structure in the fabrication of solid particulate filter bodies and other selectively manifolded structures. Alternatively, a thin transparent polyester film may be attached to an open surface of a honeycomb structure and openings melted through it.

US 2004/149026 A1 describes a method and system for analyzing the adhesion of a coating. The method comprises the steps of directing light into the coating, using an image detector to collect light and fluorescence images from the coating/substrate combination, and applying a set of analysis tests to the collected light and fluorescence images. It also describes a method and system for quantitatively analysing the spatially resolved curing condition of a coating. The method comprises the steps of providing a coating with a fluorophore that is responsive to a defined curing condition, applying the coating onto a substrate, and using the defined curing process to cure the coating. The method comprises the further steps of using an image detector to collect fluorescence image from the coating, and applying a set of analysis tests to the fluorescence image.

JP2007313741 A, published after the priority date of the present application, discloses a sheet processing machine.

### Disclosure of the Invention

When a mask tape is stuck on an end surface of a honeycomb structure segment, in particular, when a mask tape is stuck by the use of a sticking device in order to effectively stick the mask tape, there is a case that the mask tape does not stick on the end surface or that the mask tape sticks on only a part of the end surface. In such a case, the bonding material enters the portion on which the mask tape is not stuck on the end surface to cover the cell open portion and cause clogging. Lest such a problem of covering cell open portions should be caused, the sticking state of a mask tape on a segment end surface has been visually observed conventionally. However, because of eye observation, oversight may be caused, and it is disadvantageous for production costs.

The present invention has been made in view of the aforementioned problems and aims to provide a method for detecting a mask defect on a honeycomb structure end surface, the method being capable of effectively detecting a defect of sticking of a mask tape on an end surface of a honeycomb structure.

In order to achieve the aforementioned aim, in the present invention, there is provided a method for detecting a mask defect on an end surface of a honeycomb structure according to claim 1.
[1] A method for detecting a mask defect of an end surface of a honeycomb structure, the honeycomb structure having porous partition walls separating and forming a plurality of cells extending in the direction of a central axis of the honeycomb structure to an end surface of said honeycomb structure, wherein the end portion of predetermined cells on one end portion side of the honeycomb structure may be plugged; the method comprising the steps of : obtaining a first processing image by, while irradiating an end surface of a honeycomb structure which has undergone a step of sticking a transparent mask tape on the end surface with a first irradiation light beam which forms an angle of 45° or more with a central axis of the honeycomb structure, imaging the entire end surfacefrom a position on the extension of the central axis of the honeycomb structureobtaining a second processing image by, while irradiating the end surface with a second irradiation light beam which forms an angle of 5° or less with the central axis of the honeycomb structure, imaging the entire end surface from a position on the extension of the central axis of the honeycomb structure; comparing the first and second processing images to identify a portion on which the mask tape is not stuck; and detecting a mask defect of the end surface of the honeycomb structure by calculating the ratio of the area of the unplugged cells in the portion on which the mask tape is not stuck to the area of the entire end surface and comparing the ratio to a threshold value above which a mask defect is said to be present.
[2] The method for detecting a mask defect of an end surface of a honeycomb structure according to [1], wherein the first processing image and the second processing image are obtained by an imaging device disposed on an extension of the central axis of the honeycomb structure, and the front side of the end surface of the honeycomb structure is irradiated with the second irradiation light beam by a ring-shaped illuminator or a domal illuminator disposed to form an angle of 5° or less by the central axis thereof with the central axis of the honeycomb structure.

According to a method for detecting a mask defect of an end surface of a honeycomb structure of the present invention, since a portion on which a mask tape is stuck on the end surface of the honeycomb structure whitely appears by a regular reflection light in the second processing image with a portion where the mask tape is not stuck showing an image of the cell on one end surface of a honeycomb structure as it is, the sticking state of the mask tape can be detected by confirming the portion whitely appearing in the second processing image. When at least the portion other than central portion of the end surface whitely appears, it means that the mask tape is well stuck on the end surface of the honeycomb structure. When a cell image of an end surface of the honeycomb structure is shown partially or in whole, it shows a state of having a portion on which the mask tape is not stuck or a state that the mask tape is not stuck at all. This enables to effectively detect a mask defect on an end surface of a honeycomb structure. Incidentally, since the second processing image sometimes does not show an image of the central portion of the end surface by a regular reflection light due to disposition of an imaging device, there is a case that the central portion of the end surface does not appear whitely even if the mask tape is stuck thereon, and therefore, it is preferable that the central portion is not used for judgment of sticking of a mask tape.

### Brief Description of the Drawing

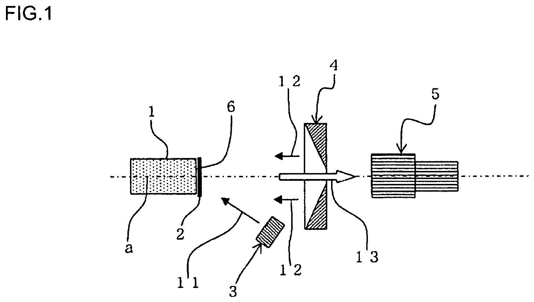

[Fig. 1] Fig. 1 is a cross-sectional view schematically showing arrangement of a honeycomb structure and devices in an embodiment of a method for detecting a mask defect of an end surface of a honeycomb structure of the present invention.

### Description of Reference Numerals

1: honeycomb structure, 2: mask tape, 3: illuminator, 4: ring-shaped illuminator, 5: imaging device, 6: end surface, 11: first irradiation light beam, 12: second irradiation light beam, 13: regular reflection light, a: central axis

### Best Mode for Carrying out the Invention

Next, an embodiment of the present invention will be described in detail with referring to the drawing. However, the present invention is by no means limited to the following embodiment.

In an embodiment of a method for detecting a mask defect of an end surface of a honeycomb structure of the present invention, in the first place, there is obtained the first processing image by, while irradiating an end surface of a honeycomb structure which has undergone a step of sticking a transparent mask tape on the end surface with a light beam (first irradiation light beam) which forms an angle of 45° or more with a central axis of the honeycomb structure, imaging the entire end surface from the front side of the end surface.

There is no particular limitation on the step where the transparent mask is stuck on the end surface of the honeycomb structure, and there may be employed a known method such as a method where a mask tape cut to have a predetermined size by a machine is stuck on an end surface of a honeycomb structure. In this step, generally, a mask tape is stuck on an end surface of a honeycomb structure, which sometimes results in failure. Therefore, the "end surface of a honeycomb structure which has undergone a step of sticking a transparent mask tape on the end surface" includes not only an end surface on which the mask tape is stuck in a good state, but also an end surface on which the mask tape is stuck in a part thereof and an end surface on which the mask tape is not stuck.

The mask tape is not particularly limited, and an adhesive tape obtained by applying an adhesive on a synthetic resin tape is suitably used. There is no particular limitation on a material for the synthetic resin tape, and polyester (thermal shrinkage) or the like may be employed. The thickness of the synthetic resin tape is preferably about 30 to 50 µm though it is not particularly limited. Though there is no particular limitation on the adhesive, there may be employed an acryl based adhesive or the like.

A honeycomb structure used in the present embodiment is a cylindrical structure having porous partition walls separating and forming a plurality of cells, and an end surface of the honeycomb structure (a honeycomb structure end surface) is an end surface in the direction where the aforementioned cells extend (direction of the central axis). Though there is no particular limitation on the honeycomb structure, and any material, size, and shape can be employed, the present invention can suitably be applied to a silicon carbide honeycomb structure. In particular, when a plurality of segments of a silicon carbide honeycomb structure are bonded together at outer peripheral surfaces thereof, the present invention can suitably be used in order to inhibit clogging of cell open portions on the end surface of each honeycomb segment. The mask tape is preferably stuck on both the end portions of the honeycomb structure (segment). In addition, the honeycomb structure (segment) may be plugged in the end portions of predetermined cells on one end portion side of the honeycomb structure and in the end portions of the other cells on the other end portion side of the honeycomb structure. In this case, it is preferable that the plugging is formed in a checkerwise pattern on each end surface.

According to the invention, as shown in Fig. 1, there is obtained the first processing image by, while irradiating an end surface 6 of a honeycomb structure 1 with a light beam (first irradiation light beam) 11 which forms an angle of 45° or more with a central axis a of the honeycomb structure 1, imaging the entire end surface 6 from the front side of the end surface 6. Fig. 1 is a cross-sectional view schematically showing arrangement of a honeycomb structure and devices in an embodiment of a method for detecting a mask defect on an end surface of a honeycomb structure of the present invention.

The end surface 6 of the honeycomb structure 1 is irradiated with the first irradiation light beam 11 from the illuminator 3, and the first irradiation light beam 11 forms an angle of 45° or more, preferably 45 to 85°, more preferably 60 to 85°, particularly preferably 70 to 75° with the central axis a of the honeycomb structure 1. By specifying the aforementioned angle to such a range, when the end surface 6 was imaged from the front side, a cell image of the end surface of the honeycomb structure can be taken well without imaging a regular reflection light due to a mask tape 2 of the first irradiation light beam. Because the mask tape 2 is transparent, as shown in Fig. 1, even with the mask tape 2 stuck on the end surface 6, the cell image on the end surface of the honeycomb structure can be taken. When the angle of the first irradiation light beam 11 with the central axis a of the honeycomb structure is smaller than 45°, the regular reflection light due to the mask tape 2 is imaged, which is not preferable. When the angle is larger than 85°, brightness of the end surface 6 may be insufficient.

There is no particular limitation on the illuminator 3, and a bar illuminator, a backlight illuminator, or the like may be employed. When a LED is used, a diffusion panel is preferably used to cancel illumination unevenness. There is no particular limitation on the distance between the end surface 6 of the honeycomb structure 1 and the illuminator 3, and the position may be any position as long as the good first processing image can be obtained.

The image of the end surface 6 of the honeycomb structure is taken from the front side of the end surface 6, and, as shown in Fig. 1, it is imaged by an imaging device 5 disposed on the extension of the central axis a of the honeycomb structure 1. "Imaging from the front side of the end surface" means imaging the end surface from the extension of the central axis of the honeycomb structure. For example, as shown in Fig. 1, it means imaging of the end surface by disposing an imaging device on the extension of the central axis of the honeycomb structure. The first processing image taken by the imaging device 5 is subjected to image processing by a computer to be used for a comparison with the second processing image. There is no particular limitation on the method for the image processing, and a known computer image-processing method can be employed. For example, binarization may be employed.

There is no particular limitation on the imaging device 5, and a CCD camera or the like may be used.

The distance between the end surface 6 of the honeycomb structure 1 and the imaging device 5 is not particularly limited, and the position may be any portion as long as the good first processing image and the good second processing image can be obtained.

Next, after the first processing image is obtained, there is obtained a second processing image by, while irradiating the end surface 6 of the honeycomb structure 1 with a light beam (second irradiation light beam) 12 which forms an angle of 5° or less with the central axis of the honeycomb structure 1, imaging the entire end surface 6 from the front side of the end surface 6.

According to the invention, as shown in Fig. 1, the end surface 6 of the honeycomb structure 1 is irradiated with the second irradiation light beam 12 which forms an angle of 5° or less with the central axis a of the honeycomb structure 1. The angle of the second irradiation light beam 12 with the central axis a of the honeycomb structure 1 is 5° or less, preferably 3° or less, more preferably 1° or less, particularly preferably 0°. By specifying the angle of the second irradiation light beam 12 with the central axis a of the honeycomb structure 1 to such a range, in a portion on which a mask tape is stuck on the end surface 6 of the honeycomb structure 1, the second irradiation light beam 12 regularly reflects on the surface of the mask tape 2, and an image is taken as an image due to the regular reflection light 13 on the front side of the end surface 6 of the honeycomb structure 1. A white image appears as the image by a regular reflection light 13. In a portion on which the mask tape 2 is not stuck on the end surface 6 of the honeycomb structure 1, an image by a reflection light where the second irradiation light beam 12 is reflected by a cell of the end surface is taken by the imaging device 5, and the structure of the end surface of the honeycomb structure is imaged. This enables to distinguish a portion of regular reflection on the surface of the mask tape 2 from the portion where the other structure is imaged among the end surface 6. When the angle of the second irradiation light beam 12 with the central axis a of the honeycomb structure 1 is larger than 5°, the image due to the regular reflection light 13 where the second irradiation light beam 12 is regularly reflected on the end surface 6 of the honeycomb structure 1 cannot be taken well on the front side of the end surface 6, which is not preferable.

Here, regarding the vicinity of the central axis a (vicinity of the center) of the end surface 6 of the honeycomb structure 1, since the image is taken with disposing the imaging device on the extension of the central axis a, irradiation with the second irradiation light 12 at the aforementioned angle is difficult, and imaging by the regular reflection light is difficult. Therefore, in the second processing image, even if the mask tape 2 is stuck well on the end surface 6, it is difficult to form a white image due to the regular reflection light in the vicinity of the center of the end surface 6. Therefore, regarding the vicinity of the center of the end surface 6, it is preferable that whether the mask tape 2 is stuck or not is not judged. Sticking the mask tape 2 on the end surface 6 of the honeycomb structure 1 is for inhibiting a cell open portion of the end surface 6 from being clogged with a bonding material or the like, and, if the mask tape 2 is stuck on the outer peripheral (outer edge) portion, the bonding material can be inhibited from entering a cell open portion even if the mask tape 2 is not stuck well on the central portion of the end surface 6. Therefore, regarding the vicinity of the center of the end surface 6, it is not necessary to judge whether the mask tape 2 is stuck or not as long as the sticking state of the mask tape 2 in the portion other than the vicinity of the center of the end surface 6 can be confirmed.

As shown in Fig. 1, irradiation with the second irradiation light beam 12 is preferably performed by a ring-shaped illuminator 4 disposed on a front side of the end surface 6 of the honeycomb structure 1 in such a manner that the central axis thereof forms an angle of 5° or less with the central axis a of the honeycomb structure 1. It is preferable because, by using the ring-shaped illuminator, imaging of the end surface 6 of the honeycomb structure 1 becomes possible by the imaging device 5 disposed on the extension of the central axis of the honeycomb structure 1 through the hole in the central portion of the ring shape. In addition, it is preferable to perform the irradiation with the second irradiation light 12 by a dome-shaped (domal) illuminator (not illustrated) disposed on the front side of the end surface 6 of the honeycomb structure 1 in such a manner that the central axis of the illuminator forms an angle of 5° or less with the central axis a of the honeycomb structure 1.

When a ring-shaped illuminator is used, the angle of the central axis of the ring-shaped illuminator 4 with the central axis a of the honeycomb structure 1 is preferably 5° or less, more preferably 3° or less, particularly preferably 1° or less, most preferably 0°. By specifying the angle of the central axis of the ring-shaped illuminator 4 with the central axis a of the honeycomb structure 1 to such a range, it becomes possible that the end surface 6 of the honeycomb structure 1 is uniformly irradiated and that the regular reflection light from the entire end surface 6 enters the imaging device. When the angle of the central axis of the ring-shaped illuminator 4 with the central axis a of the honeycomb structure 1 is larger than 5°, sometimes, the end surface 6 of the honeycomb structure 1 cannot be irradiated uniformly, and, sometimes, the good second processing image cannot be obtained. In addition, also, in the case of using a domal illuminator, the relation between the central axis of the domal illuminator 4 with the central axis a of the honeycomb structure 1 is preferably the same as the aforementioned case of using a ring-shaped illuminator.

The "ring-shaped illuminator 4 is disposed on the front side of the end surface 6 of the honeycomb structure 1" means that the ring-shaped illuminator 4 is disposed so as to be located on the extension of the central axis of the honeycomb structure 1. In addition, it is preferable that, when the end surface 6 of the honeycomb structure 1 and the ring-shaped illuminator 4 are projected on a plane in parallel with the end surface 6 of the honeycomb structure 1, the image of the end surface 6 of the honeycomb structure 1 is included in the range of the image of the ring-shaped illuminator 4. It is further preferable that the central point of the image of the end surface 6 of the honeycomb structure 1 overlaps with the central point of the image of the ring-shaped illuminator 4. By disposing the ring-shaped illuminator 4 in such a position, the regular reflection light from the entire end surface 6 can enter the imaging device.

There is no particular limitation on the distance between the end surface 6 of the honeycomb structure 1 and the ring-shaped illuminator 4 as long as they are positioned to be able to obtain the good second processing image.

As the illuminator for emitting the second irradiation light beam, a coaxial epi-illuminator or the like may be employed besides the ring-shaped illuminator and the domal illuminator.

Next, by a comparison of the aforementioned first processing image with the aforementioned second processing image by image processing, an image by the light regularly reflected by the mask tape (regular reflection light) and the other image in the second processing image are identified to detect a mask defect of the end surface of the honeycomb structure.

A method for detecting a mask defect of the end surface of the honeycomb structure by calculating the ratio of the area of unplugged cells in a portion on which the mask tape is not stuck to the area of the entire end surface with using the first processing image and the second processing image is as follows. The first processing image is an image obtained by imaging the end surface 6 of the honeycomb structure 1, and the second processing image includes a white image due to the regular reflection light from the mask tape 2 and the other image. The white image in the second processing image shows a portion where the mask tape 2 is stuck well on the end surface 6, and the other image is an image where the mask tape 2 is not stuck on the end surface 6. In the first place, by image processing the first processing image, the outer periphery of the end surface is recognized to calculate the area of the entire end surface. By image processing the second processing image, unplugged cells in a region (portion) on which the mask tape is not stuck are recognized, and the area is calculated from the number of the recognized unplugged cells . Then, by calculating the ratio of the area of unplugged cells in a portion on which the mask tape is not stuck to the area of the entire end surface, a mask defect of the end surface of the honeycomb structure is detected. It is preferable that the recognition of the unplugged cells in the second processing image is performed by setting the area of one cell in advance and recognizing the cells as unplugged cells when the area of the "portion to be judged whether the cells are plugged or not" recognized in the second processing image is within the range of the cell whose area is set in advance. The aforementioned calculation processing is preferably performed by the use of a computer. The ratio of the area of unplugged cells in a portion on which the mask tape is not stuck to the area of the entire end surface is preferably 0.35% or less, and, when the ratio of the aforementioned area is within such a range, it may be said that there is no mask defect. Here, since the image in a portion on which the mask tape 2 is not stuck (the other image) in the second processing image becomes the same as the image obtained by directly imaging the end surface 6 of the honeycomb structure 1 (image of the cells on the end surface and plugging portions when plugging is performed), the portion having the same image as the first processing image (image of the cells on the end surface and plugging portions when plugging is performed) among the second processing image is the portion on which the mask tape 2 is not stuck. Incidentally, in the second processing image, in the case that not a white image, but the cell shape of the end surface 6 is imaged in the central portion of the end surface 6, it is preferable that whether the portion of the cell shape has a mask defect or not is not judged.

Since a mask defect of the end surface of the honeycomb structure is detected by thus taking the first processing image and the second processing image and subjecting the images to image processing to compare the images, a mask defect can effectively be detected without requiring manpower.

### Example

Hereinbelow, the present invention will be described more specifically with referring to Examples. However, the present invention is by no means limited to these Examples.

### (Manufacturing of honeycomb structure)

There were mixed 80 parts by mass of a SiC powder and 20 parts by mass of a metal Si powder together, and to the mixture were added starch and a resin balloon as pore formers and further added methyl cellulose, hydroxypropoxylmethyl cellulose, a surfactant, and water to manufacture kneaded clay having plasticity (forming clay) . The kneaded clay was subjected to extrusion forming using a die for forming a honeycomb structure, followed by drying by microwaves and hot air to obtain a honeycomb formed article having a cell density of about 46.5 cells/cm² (300 cells/sq. in.), a square cross section having a side of 35 mm, and a length of 152 mm. The honeycomb formed article was subjected to plugging in such a manner that each of the end surfaces showed a checkerwise pattern to obtain a plugged honeycomb formed article. That is, plugging was performed so that adjacent cells were plugged in mutually opposite side end portions. As the plugging material, the same material as that for the honeycomb formed article was used. Next, degreasing was performed at about 400°C in an ambient atmosphere, and then firing was performed at about 1450°C in an Ar inert atmosphere to obtain a honeycomb segment (honeycomb structure) having a porous structure where SiC crystal particles were bonded together with Si.

### (Step of sticking a mask tape)

On an end surface of the honeycomb structure (segment) was bonded a transparent tape formed by applying an acryl based adhesive as the adhesive on a thermal compression polyester transparent tape (base material). As the mask tape, a tape having a base material thickness of 40 µm and an adhesive thickness of 50 µm (total thickness of 90 µm) was employed.

### (Example 1)

While the end surface of a honeycomb structure (segment) which had undergone the step of sticking the aforementioned mask tape was irradiated with the first irradiation light beam 11 as shown in Fig. 1, the entire surface 6 was imaged from the front side by the imaging device 5 to obtain the first processing image. The angle of the first irradiation light beam 11 with the central axis a of the honeycomb structure 1 was 73°. The imaging device 5 was disposed on the extension of the central axis of the honeycomb structure. As the illuminator to emit the first irradiation light beam 11, a bar illuminator was used, and, as the imaging device 5, a VGA camera was used.

Next, while irradiating the end surface 6 of the honeycomb structure 1 with the second irradiation light beam 12, the entire end surface 6 was imaged from the front side by the imaging device 5 to obtain the second processing image. The angle of the second irradiation light beam 12 with the central axis a of the honeycomb structure 1 was 1° or less. As the illuminator to emit the second irradiation light beam 12, a domal illuminator was used. As shown in Fig. 1, the domal illuminator was disposed in such a manner that the central axis thereof overlapped with the extension of the central axis of the honeycomb structure 1.

By specifying the area of unplugged cells in a portion where the mask tape is not stuck and which was obtained by subjecting the second processing image to computer image processing (binarization) with respect to the outer shape range of the honeycomb structure obtained by the first processing image, a mask defect of the end surface of the honeycomb structure was detected. Incidentally, in the second processing image, the image of the portion where the mask tape is stuck is white, and the image of the portion where the mask tape is not stuck is the same as the image in the case of directly imaging the end surface of the honeycomb structure (the image of the cells on the end surface and the plugging portions) . In the first processing image, the area of the outer shape range of the end surface (outer periphery of the end surface) of the honeycomb structure was calculated by the image processing, and, in the second processing image, the area of the unplugged cells in the portion on which the aforementioned mask tape was not stuck was calculated by the image processing to calculate the ratio of the area of unplugged cells in a portion on which the mask tape is not stuck to the area of the outer shape range of the end surface of the honeycomb structure. The case that the area of the unplugged cells in the portion on which the aforementioned mask tape was not stuck was 0.35% or less with respect to the area of the entire end surface was evaluated as "passed", and the case that it was above 0.35% was evaluated as "failed". Incidentally, in the second processing image, recognition of the unplugged cells was performed by setting the area of one cell in advance and recognizing as an unplugged cell when the area of the portion (cell) to be judged whether the cell is plugged or not is within the range of the area set above of the cell.

Incidentally, in the second processing image, "cells and plugged portions" were imaged in the central portion of the end surface of the honeycomb structure. However, the central portion of the end surface of the honeycomb structure where the "cells and plugged portions" were imaged was not included in the portion on which the mask tape was not stuck. The central portion of the end surface is the region where the regular reflection light does not enter the imaging device since the imaging device was disposed in the central portion of the domal illuminator. Therefore, the image of the central portion of the end surface is not a white image, but an image where the "cells and plugged portions" are reflected. That is, since what a white image was not obtained does not relate to whether the mask tape is stuck or not, the central portion of the end surface was not included in the portion on which the mask tape was not stuck. Incidentally, even if there is a portion on which the mask tape is not stuck in the central portion, since the bonding material applied on side surfaces upon bonding honeycomb structures (segments) together does not cause a problem of clogging of the cells on the end surface, it does not fall under a mask defect. Here, the "central portion of the end surface" means the range of a circle having a radius of 10 mm.

### (Evaluation)

By the aforementioned method, 59868 honeycomb structures (segments) were manufactured, and each of the honeycomb structures was subjected to the operation in the step of sticking the mask tape to detect a mask defect on the end surface of each honeycomb structure of Example 1. As a result, a mask defect was confirmed in 18 honeycomb structures (0.03%) out of the 59868 honeycomb structures. The mask defect on the end surface of each honeycomb structure of Example 1 was detected quickly and precisely in comparison with the case of detecting a mask defect on the end surface of a honeycomb structure by eye observation.

### Industrial Applicability

A method for detecting a mask defect of an end surface of a honeycomb structure of the present invention can suitably be used in a process for manufacturing a large-sized honeycomb structure by bonding a plurality of honeycomb-structured segments together.

## Claims

1. A method for detecting a mask defect of an end surface of a honeycomb structure (1), the honeycomb structure (1) having porous partition walls separating and forming a plurality of cells extending in the direction of a central axis of the honeycomb structure to an end surface (6) of said honeycomb structure (1), wherein the end portion of predetermined cells on one end portion side of the honeycomb structure may be plugged;
the method comprising the steps of:
obtaining a first processing image by, while irradiating an end surface (6) of a honeycomb structure (1) which has undergone a step of sticking a transparent mask tape (2) on the end surface (6) with a first irradiation light beam (11) which forms an angle of 45° or more with a central axis (a) of the honeycomb structure (1), imaging the entire end surface (6) from a position on the extension of the central axis of the honeycomb structure (1);
obtaining a second processing image by, while irradiating the end surface (6) with a second irradiation light beam (12) which forms an angle of 5° or less with the central axis (a) of the honeycomb structure (1), imaging the entire end surface (6) from a position on the extension of the central axis of the honeycomb structure (1);
comparing the first and second processing images to identify a portion on which the mask tape (2) is not stuck; and
detecting a mask defect of the end surface (6) of the honeycomb structure (1) by calculating the ratio of the area of the unplugged cells in the portion on which the mask tape (2) is not stuck to the area of the entire end surface (6) and comparing the ratio to a threshold value above which a mask defect is said to be present.

2. The method for detecting a mask defect of an end surface of a honeycomb structure (1) according to Claim 1, wherein the first processing image and the second processing image are obtained by an imaging device (5) disposed on an extension of the central axis (a) of the honeycomb structure (1), and
the front side of the end surface (6) of the honeycomb structure (1) is irradiated with the second irradiation light beam (12) by a ring-shaped illuminator (4) or a domal illuminator disposed to form an angle of 5° or less by the central axis thereof with the central axis (a) of the honeycomb structure (1).

## Patentansprüche

1. Verfahren zur Detektion eines Maskendefekts einer Endoberfläche einer Wabenstruktur (1), wobei die Wabenstruktur (1) poröse Trennwände aufweist, die eine Vielzahl von Zellen trennen und ausbilden, die sich in die Richtung einer Mittelachse der Wabenstruktur zu einer Endoberfläche (6) der Wabenstruktur (1) erstrecken, wobei der Endabschnitt von vorbestimmten Zellen an einer Endabschnittsseite der Wabenstruktur verschlossen sein können;
wobei das Verfahren folgende Schritte umfasst:
das Erhalten eines ersten Bearbeitungsbilds, unter Bestrahlung einer Endoberfläche (6) einer Wabenstruktur (1), die einem Schritt des Aufklebens eines transparenten Maskierungsklebebands (2) auf die Endoberfläche (6) unterzogen wurde, mit einem ersten Bestrahlungslichtstrahl (11), der einen Winkel von 45° oder mehr mit einer Mittelachse (a) der Wabenstruktur (1) bildet, durch Abbilden der gesamten Endoberfläche (6) von einer Position in der Verlängerung der Mittelachse der Wabenstruktur (1) aus;
das Erhalten eines zweiten Bearbeitungsbilds, unter Bestrahlung der Endoberfläche (6) mit einem zweiten Bestrahlungslichtstrahl (12), der einen Winkel von 5° oder weniger mit der Mittelachse (a) der Wabenstruktur (1) bildet, durch Abbilden der gesamten Endoberfläche (6) von einer Position in der Verlängerung der Mittelachse der Wabenstruktur (1) aus;
das Vergleichen des ersten und des zweiten Bearbeitungsbilds zur Identifizierung eines Abschnitts, auf dem das Maskierungsklebeband (2) nicht aufgeklebt ist; und
das Detektieren eines Maskendefekts der Endoberfläche (6) der Wabenstruktur (1) durch Berechnen des Verhältnisses der Fläche der nicht verschlossenen Zellen in dem Abschnitt, auf dem das Maskierungsklebeband (2) nicht aufgeklebt ist, zu der Fläche der gesamten Endoberfläche (6) und das Vergleichen des Verhältnisses mit einem Schwellenwert, oberhalb dessen davon ausgegangen wird, dass ein Maskendefekt vorliegt.

2. Verfahren zur Detektion eines Maskendefekts einer Endoberfläche einer Wabenstruktur (1) nach Anspruch 1, wobei das erste Bearbeitungsbild und das zweite Bearbeitungsbilds durch eine Bildgebungsvorrichtung (5) erhalten werden, die auf einer Verlängerung der Mittelachse (a) der Wabenstruktur (1) angeordnet ist, und
wobei die Vorderseite der Endoberfläche (6) der Wabenstruktur (1) mit dem zweiten Bestrahlungslichtstrahl (12) durch einen ringförmigen Illuminator (4) oder einen kuppelförmigen Illuminator bestrahlt wird, der angeordnet ist, um einen Winkel von 5° oder weniger zwischen seiner Mittelachse und der Mittelachse (a) der Wabenstruktur (1) auszubilden.

## Revendications

1. Procédé pour détecter un défaut de masque d'une surface d'extrémité d'une structure en nid d'abeille (1), la structure en nid d'abeille (1) ayant des parois de séparation poreuses séparant et formant une pluralité de cellules s'étendant dans la direction d'un axe central de la structure en nid d'abeille par rapport à une surface d'extrémité (6) de ladite structure en nid d'abeille (1), dans lequel la partie d'extrémité de cellules prédéterminées sur un premier côté de partie d'extrémité de la structure en nid d'abeille peut être bouchée ;
le procédé comprenant les étapes consistant à :
obtenir une première image de traitement en, tout en irradiant une surface d'extrémité (6) d'une structure en nid d'abeille (1) qui a subi une étape de collage d'une bande de masque transparent (2) sur la surface d'extrémité (6) avec un premier faisceau de lumière d'irradiation (11) qui forme un angle de 45° ou plus avec un axe central (a) de la structure en nid d'abeille (1), imageant la surface d'extrémité entière (6) à partir d'une position sur le prolongement de l'axe central de la structure en nid d'abeille (1) ;
obtenir une seconde image de traitement en, tout en irradiant la surface d'extrémité (6) avec un second faisceau de lumière d'irradiation (12) qui forme un angle de 5° ou moins avec l'axe central (a) de la structure en nid d'abeille (1), imageant la surface d'extrémité entière(6) à partir d'une position sur le prolongement de l'axe central de la structure en nid d'abeille (1) ;
comparer les première et seconde images de traitement pour identifier une partie sur laquelle la bande de masque (2) n'est pas collée ; et
détecter un défaut de masque de la surface d'extrémité (6) de la structure en nid d'abeille (1) en calculant le rapport de l'aire des cellules non bouchées dans la partie sur laquelle la bande de masque (2) n'est pas collée sur l'aire de la surface d'extrémité entière (6) et en comparant le rapport à une valeur de seuil au-dessus de laquelle un défaut de masque est dit être présent.

2. Procédé de détection d'un défaut de masque d'une surface d'extrémité d'une structure en nid d'abeille (1) selon la revendication 1, dans lequel la première image de traitement et la seconde image de traitement sont obtenues par un dispositif d'imagerie (5) disposé sur un prolongement de l'axe central (a) de la structure en nid d'abeille (1), et
la face avant de la surface d'extrémité (6) de la structure en nid d'abeille (1) est irradiée avec le second faisceau de lumière d'irradiation (12) par un dispositif d'illumination en forme d'anneau (4) ou un dispositif d'illumination en forme de dôme disposé pour former un angle de 5° ou moins via son axe central avec l'axe central (a) de la structure en nid d'abeille (1).
